Europäisches Patentamt

European Patent Office

Office européen des brevets

(11) Veröffentlichungsnummer: **0 294 362 B1**

# EUROPÄISCHE PATENTSCHRIFT

(45) Veröffentlichungstag der Patentschrift: **19.11.92**

(51) Int. Cl.⁵: **B09B** 3/00, C04B 18/02

(21) Anmeldenummer: **88890132.9**

(22) Anmeldetag: **01.06.88**

(54) Verfahren und Einrichtung zur Herstellung wasserunlöslicher Granulate, Formkörper od.dgl.

(30) Priorität: **05.06.87 AT 1441/87**

(43) Veröffentlichungstag der Anmeldung:
**07.12.88 Patentblatt 88/49**

(45) Bekanntmachung des Hinweises auf die
Patenterteilung:
**19.11.92 Patentblatt 92/47**

(84) Benannte Vertragsstaaten:
**AT BE CH DE ES FR GB GR IT LI LU NL SE**

(56) Entgegenhaltungen:
**EP-A- 0 239 683**
**WO-A-86/07589**
**DE-A- 2 254 750**
**DE-A- 3 528 054**

(73) Patentinhaber: **ENTSORGUNGSBETRIEBE SIMMERING GESELLSCHAFT m.b.H. & Co. KG**
**Haidequerstrasse 6**
**A-1110 Wien(AT)**

(72) Erfinder: **Ruggenthaler, Peter Thomas,**
**Dipl.-Ing. Dr. techn.**
**Laxenburgerstrasse 115**
**A-1100 Wien(AT)**

(74) Vertreter: **Kliment, Peter, Dipl.-Ing. Mag.-jur.**
**Singerstrasse 8/3/8**
**A-1010 Wien(AT)**

## Beschreibung

Die Erfindung betrifft ein Verfahren zur Herstellung wasserunlöslicher Feststoffe aus den Produkten einer Entsorgung mit folgenden Schritten:

- Zuführung der Abfallstoffe zu einem ersten Hochtemperatur-Prozeß bei einer Temperatur oberhalb von 500°C;
- erforderlichenfalls Trocknung der aus dem ersten Hochtemperatur-Prozeß stammenden Zwischenprodukte bis zur Gewichtskonstanz;
- Weiterverarbeitung dieser Zwischenprodukte bei einer der Schmelztemperatur eutektischen Glasgemenge entsprechenden Temperatur in einem weiteren Hochtemperatur-Prozeß zu glasigen und/oder gesinterten Endprodukten in Form von Granulaten oder Formkörpern.

Aus der De-A- 2 254 750 ist ein Verfahren zur Herstellung eines Zuschlagsstoffes für Beton oder Mörtel unter Verwendung von überwiegend organischen Abfallstoffen bekannt. Dabei werden diese Abfallstoffe bei so hohen Temperaturen verbrannt, daß die unverbrennbaren Bestandteile aufgeschmolzen werden. Diese Schmelze wird dann durch schnelles Abkühlen in ein Granulat von glasiger Beschaffenheit übergeführt. Auf diese Weise ist es möglich ein Endprodukt zu erzeugen, das auf Grund seiner Korngröße und Oberflächenstruktur und insbesondere seiner Festigkeit wegen als Zuschlagstoff für Beton geeignet ist. Solche Verfahren haben sich in der Praxis jedoch wenig durchgesetzt, da die Qualität der Baumaterialien in verschiedenster Weise beeinträchtigt wird.

Aufgabe der Erfindung ist es, ein Verfahren zur Entsorgung von Abfallstoffen derart zu gestalten, daß damit ein für die Umwelt absolut unschädliches Endprodukt gewonnen werden kann. Dieses soll bei minimalem Raumbedarf und hoher Festigkeit ohne Gefahr für die Umgebung und für das Grundwasser in oberirdischen oder unterirdischen Deponien gelagert werden können, ohne einer nennenswerten Verwitterung bzw. Eluation zu unterliegen. Eine weitere Aufgabe der Erfindung ist es, den für die Durchführung des Verfahrens erforderlichen Arbeits- und Energieaufwand möglichst niedrig zu halten und insbesondere für die Verarbeitung der Abfallstoffe aufgewendeter Energie wirtschaftlich voll auszuwerten.

Aus der DE-OS 35 31 607 ist es bekannt, Verbrennungsofenasche, die $SiO_2$ und $Al_2O_3$ enthält, mit NaOH- und gegebenenfalls $SiO_2$-haltigen Stoffen auf eine Mischung zu bringen, die 25 bis 90 Gew-% $SiO_2$0, 2 bis 10 Gew.-% $Na_2O$ und mehr als 3 Gew.-% $Al_2O_3$ enthält. Diese Mischung wird im Verhältnis von 100 zu mehr als 5 Gew.-Teilen mit Wasser gemischt und die Masse bei einem Druck von mehr als 70 $kg/cm^2$ und einer Temperatur von mehr als 150°C zur Fixierung bzw. Bindung der Koponenten behandelt.

Jodsorbens, das durch Adsorption von Jod an silberbeladenes Silikat erhalten wird, wird in ähnlicher Weise mit einer Verbindung aus der Gruppe Natriumhydroxid, Kaliumhydroxid und Bariumhydroxid behandelt und dann ebenfalls unter den oben genannten Bedingungen fixiert.

Durch die angewandte Hydrothermalreaktion werden bei diesem Verfahren zwar die Metalle und das Jod an eine Alumnosilikat-Netzstruktur fixiert, diese Struktur ist jedoch nicht so widerstandsfähig, daß eine bedenkenlose Lagerung oder Deponierung der erhaltenen Produkte auf lange Sicht möglich ist.

Gemäß der DE-OS 35 28 054 sollen toxische Stoffe in eine Matrix aus Wasserglas und Metalloxiden eingebunden werden, um sie unlöslich zu machen und zu verhindern, daß sie bei der Deponierung oder insbesondere der Tiefseelagerung in den Biokreislauf gelangen.

Als toxische Stoffe sind beispielsweise Arsen-, Nickel-, Cobalt-, Beryllium-, Cadmium- und Chromverbindungen, Zinkchromat, Antimonoxid und dergleichen genannt, aber auch organische Stoffe, wie Dibenzodioxin- und Dibenzofuranervate oder toxische Pyrolyseprodukte aus organischen Verbindungen.

Die Ausgangsmischungen aus Natrium- oder Kaliumwasserglas, Metalloxiden und toxischen Stoffen werden vorerst zu geometrischen Körpern, wie Kugeln, Pellets etc. geformt. Diese erstarren in kurzer Zeit zu druck- und wasserfesten Produkten, die nach eventuellen Aufbringen eines Überzugs aus Natron- oder Kaliwasserglas, Kieselgur, Magnesiumoxid und Flußspat zur Verbesserung oder Widerstandsfähigkeit auf Temperaturen bis zu 1200°C erhitzt werden.

Die CH-A5 620 606 beschreibt eine Einrichtung zur Aufarbeitung von Hausmüll unter Herstellung brennbarer Produkte. Nach der Zerkleinerung und Sortierung der Abfälle nach ihrer Dichte wird der im wesentlichen brennbare Anteil derselben verpreßt und zu einem Granulat extrudiert. Der erhaltene Brennstoff ist naturgemäß nicht deponierbar, da seine anorganischen und organischen Inhaltsstoffe unverändert und in löslicher Form in ihm enthalten sind.

Erfindungsgemäß ist im Einklang mit Anspruch 1 vorgesehen, daß bei einem Verfahren der eingangs gennanten Art zur Verbesserung des Schmelzflusses und zur Herabsetzung des Eutektikums Salze als Zuschlagstoffe beigegeben werden. Vorzugsweise werden, die aus dem ersten Hochtemperatur-Prozeß gewonnenen Zwischenprodukte den anschließenden zweiten Hochtempratur-Prozeß in einem direkt oder indirekt befeuerten und/oder elektrisch beheizten Tigel- oder Rohrofen unterzogen. Dies verleiht dann den aus verbrennungsrückständen bestehenden anorganischen Zwischenprodukt jene hohe Dichte und Amorphe, glasige Struktur die das Endprodukt gegen Verwitterung und eine Eluation der eventuell darin enthaltenen Schadstoffe unempfindlich macht.

Die aus dem ersten Hochtemperatur-Prozeß gewonnenen Zwischenprodukte können dem anschließenden zweiten Hochtemperatur-Prozeß in einem direkt oder indirekt befeuerten und/oder elektrisch beheizten Tiegel- oder Rohrofen oder dergleichen ortsfesten Ofen oder in einer ortsbeweglichen, aus einem oder mehreren Behältern bestehenden Schmelzanlage unterzogen werden.

Zweckdienlicherweise kann die Temperatur der Schmelze und/oder des gesinterten Gemenges im zweiten Hochtemperatur-Prozeß durch Zugabe alkalischer Zuschlagstoffe und/oder Metalle, wie Blei, enthaltender Stoffe, die bei der Aufgabe vorzugsweise unterhalb 3 Gew-% Wasser enthalten, auf einen Arbeitsbereich unterhalb 1200°C gesteuert werden.

Das erfindungsgemäße Verfahren erschließt die Möglichkeit einer besonders wirtschaftlichen und weitgehenden Verwertung der in einer Müllverbrennungsanlage auftretenden Temperatur, sofern der zweite Hochtemperatur-Prozeß unmittelbar an den ersten anschließt, bevor noch das Zwischenprodukt des ersten Prozesses wesentlich abkühlt.

Der zweite Hochtemperatur-Prozeß kann fakultativ im unmittelbaren Anschluß an den ersten im selben Brennraum durchgeführt werden, bevorzugt findet aber dieser zweite Prozeß in einem Ofen statt, der dem Brennraum des ersten Prozesses unmittelbar angeschlossen sein kann.

Für die beiden Hochtemperatur-Prozesse läßt sich vorteilhaft die aus den Abgasen einer Verbrennung wiedergewinnbare Wärme heranziehen, so daß eine Verbrennung der Abfallstoffe und die Schmelzung der dabei anfallenden Verbrennungsprodukte besonders günstig miteinander verknüpft und wirtschaftlich verquickt werden können.

Selbstverständlich sind auch die bei einer Reinigung der Abgase des ersten Prozesses anfallenden Verbrennungsrückstände (Flugaschen) für die Durchführung des zweiten Prozesses verwendbar, so daß in beiden verfahrensmäßig aufeinanderfolgenden Prozessen gemeinsam tatsächlich alle Abfallstoffe restlos verarbeitet werden können.

**Beispiel**

Im Labor wurde ein Gemenge von

| | |
|---|---|
| 1200 g | einer aus dem Elektrofilter eines Wirbelschichtofens stammenden Flugasche |
| 250 g | aus dem Elektrofilter eines Drehrohrofens stammender Flugasche |
| 380 g | aus einer Rauchgaswaschanlage stammender Klärschlamm und |
| 55 g | Industriesalz (NaCl) als Zuschlagstoff |

bei einer Temperatur von 720°C zur Schmelze gebracht.

Aus dieser Schmelze wurde ein Körper geformt, der ein Raumgewicht von 2,25 g/l aufwies, oberflächlich glasig glatt und nachweislich keiner Eluation unterworfen war.

**Patentansprüche**

1. Verfahren zur Herstellung wasserunlöslicher Feststoffe aus den Produkten einer Entsorgung mit folgenden Schritten:
   - Zuführung der Abfallstoffe zu einem ersten Hochtemperatur-Prozeß bei einer Temperatur oberhalb von 500°C;
   - erforderlichenfalls Trocknung der aus dem ersten Hochtemperatur-Prozeß stammenden Zwischenprodukte bis zur Gewichtskonstanz;
   - Weiterverarbeitung dieser Zwischenprodukte bei einer der Schmelztemperatur eutektischen Glasgemenge entsprechenden Temperatur in einem weiteren Hochtemperatur-Prozeß zu glasigen und/oder gesinterten Endprodukten in Form von Granulaten oder Formkörpern, dadurch gekennzeichnet, daß zur Verbesserung des Schmelzflusses und zur Herabsetzung des Eutektikums Salze als Zuschlagstoffe beigegeben werden.

2. Verfahren nach Anspruch 1, dadurch gekennzeichnet, daß die aus dem ersten Hochtemperatur-Prozeß gewonnenen Zwischenprodukte dem anschließenden zweiten Hochtemperatur-Prozeß in einem direkt oder indirekt befeuerten und/oder elektrisch beheizten Tiegel- oder Rohrofen od.dgl. ortsfestem Ofen unterzogen werden.

3. Verfahren nach Anspruch 1, dadurch gekennzeichnet, daß die aus dem ersten Hochtemperatur-Prozeß stammenden Zwischenprodukte in einem direkt oder indirekt befeuerten und/oder elektrisch beheizten ortsbeweglichen, aus einem oder mehreren Behältern bestehenden Schmelzaggregat erhitzt bzw. geschmolzen und/oder gesintert werden.

4. Verfahren nach Anspruch 2 oder 3, dadurch gekennzeichnet, daß die Temperatur der Schmelze und/oder des gesinterten Gemenges durch weitere Zugabe alkalischer Zuschlagstoffe und/oder metallischer oder Metalle, wie Blei enthaltender Stoffe, die bei der Aufgabe vorzugsweise unterhalb 3 Gew.-% Wasser enthalten, auf einen Arbeitsbereich unterhalb 1200°C gesteuert wird.

5. Verfahren nach einem der Ansprüche 1 bis 4, dadurch gekennzeichnet, daß der zweite Hochtemperatur-Prozeß in unmittelbaren Anschluß an den ersten in derselben Brennkammer durchgeführt wird.

6. Verfahren nach einem der Ansprüche 1 bis 4, dadurch gekennzeichnet, daß der zweite Hochtemperatur-Prozeß in einem Ofen stattfindet, der der für den ersten Prozeß dienenden Brennkammer unmittelbar benachbart ist.

## Claims

1. Method for manufacturing water-insoluble solid matter from waste disposal products comprising the following steps:
   - supplying the waste matter to a first high-temperature process carried out at a temperature in excess of 500°C;
   - if required, drying of the intermediate products originating from the high-temperature process until their weight remains constant;
   - further processing of said intermediate products at a temperature equivalent to the melting temperature of a eutectic quantity of glass in a further high-temperature process to glass-like and/or sintered final products in form of granulates or moulded bodies, characterized in that for improving the melt flux and for reducing the eutectic, salts are added as aggregates.

2. Method in accordance with claim 1, characterized in that the intermediate products obtained from the first high-temperature process are subjected to a subsequent second high-temperature process in a directly or indirectly heated or electrically heated crucible furnace or tube furnace or a similar stationary furnace.

3. Method in accordance with claim 1, characterized in that the intermediate products obtained from the first high-temperature process are heated or molten and/or sintered in a directly or indirectly heated and/or electrically heated movable melting plant consisting of one or several vessels.

4. Method in accordance with claim 2 or 3, characterized in that the temperature of the melt and/or the sintered mixture can be set to a processing range below 1200°C by further adding alkaline aggregates and/or metallic matters or metals such as lead-containing matters which preferably contain less than 3 weight percent water for this method.

5. Method as claimed in one of the claims 1 to 4, characterized in that the second high-temperature process is carried out directly after the first high-temperature process in the same furnace chamber.

6. Method as claimed in one of the claims 1 to 4, characterized in that the second high-temperature process is carried out in a furnace which is directly adjacent to the furnace chamber used for the first high-temperature process.

## Revendications

1. Procédé destiné à la fabrication de matières solides insolubles dans l'eau à partir des produits d'une élimination des déchets, comportant les étapes suivantes :

4

- amenée des déchets à un premier procédé à haute température, à une température supérieure à 500°C ;
- si nécessaire, séchage, jusqu'à poids constant, des produits intermédiaires obtenus dans le premier procédé à haute température ;
- poursuite de la transformation de ces produits intermédiaires, à une température correspondant à la température de fusion du mélange vitrifiable eutectique, au cours d'un autre procédé à haute température conduisant à des produits finis vitreux et/ou frittés sous forme de granulés et/ou d'objets moulés, caractérisé en ce que, pour améliorer l'écoulement de la masse fondue et abaisser l'eutectique, on ajoute des sels en tant que fondants.

2. Procédé selon la revendication 1, caractérisé en ce que les produits intermédiaires obtenus à partir du premier procédé à haute température sont soumis au deuxième procédé à haute température, mis en oeuvre ensuite, dans un four à creuset ou un four tubulaire ou un four fixe analogue, à chauffe directe ou indirecte et/ou à chauffage électrique.

3. Procédé selon la revendication 1, caractérisé en ce que les produits intermédiaires obtenus dans le premier procédé à haute température sont chauffés ou fondus, et/ou frittés, dans un ensemble de fusion constitué d'une ou plusieurs cuves, mobile, à chauffe directe ou indirecte et/ou à chauffage électrique.

4. Procédé selon la revendication 2 ou 3, caractérisé en ce que la température de la masse fondue et/ou du mélange vitrifiable fritté est régulée par addition de fondants alcalins et/ou de substances métalliques ou contenant des métaux, comme par exemple le plomb, substances ayant lors de leur introduction dans l'équipement une teneur en eau inférieure à 3 % en poids, la régulation se faisant sur un intervalle inférieur à 1200°C.

5. Procédé selon l'une des revendications 1 à 4, caractérisé en ce que le deuxième procédé à haute température est mis en oeuvre immédiatement après le premier, dans la même chambre de combustion.

6. Procédé selon l'une des revendications 1 à 4, caractérisé en ce que le deuxième procédé à haute température est mis en oeuvre dans un four situé au voisinage immédiat de la chambre de combustion servant au premier procédé.